# DEMANDE DE BREVET EUROPEEN

(11) **EP 0 827 691 A1**
(43) Date de publication de la demande: **11.03.1998**
(21) Numéro de dépôt: 97402054.7
(22) Date de dépôt: 03.09.1997
(51) Int. Cl.: A01N 47/44, A01N 33/12, C11D 3/48

(54) **Composition nettoyante et décontaminante en poudre, et procédé d'obtention**

(30) Priorité: 06.09.1996 FR 9610925
(71) Demandeur: PETERS, 93000 Bobigny (FR)
(72) Inventeur: Kassentini, Philippe, 95230 Soisy sous Montmorency (FR)
(74) Mandataire: Phélip, Bruno

(57) **Abrégé**

Composition nettoyante et décontaminante en poudre comprenant des charges, caractérisée en ce qu'elle comprend en outre en association, en quantités synergiques, les composés suivants:
- un sel de biguanide polymérique,
- un ou plusieurs composés cationiques ammonium quaternaire répondant à la formule R₁R₂N(CH₃)₂⁺, dans laquelle R₁ et R2 représentent indépendamment un résidu alkyle en C₃ à C₁₅, ou un groupe phényle éventuellement substitué, ou l'un de leurs sels, et.
- un alcool gras en C₆ à C₂₀ éthoxylé.

## Description

La présente invention concerne une composition nettoyante et décontaminante en poudre.

Elle est en outre relative à un procédé d'obtention d'une telle composition.

La décontamination et le nettoyage sont des opérations ayant une grande importance dans divers domaines, en particulier dans les domaines médical et hospitalier.

De manière générale, une composition décontaminante doit présenter des activités bactéricides , fongicides et virucides importantes et sur un spectre de germes aussi étendu que possible.

Des compositions nettoyantes et décontaminantes sous forme liquide ont déjà été décrites dans l'état de la technique.

On notera en particulier la composition liquide décrite dans la demande FR-2.667.220, au nom de la demanderesse, qui renferme:
- un composé amphotère à caractère cationique, et
- un composé cationique ammonium quaternaire ayant un effet bactéricide, tel que le chlorure de didécyldiméthyl ammonium.

Ces deux composés peuvent être complétés en particulier par un alcool éthoxylé, l'isotridécanol éthoxylé à huit moles d'oxyde d'éthylène.

Une autre demande de brevet au nom de la demanderesse (FR 2 695 297), est relative à une autre composition liquide comprenant, outre les composés indiqués ci-dessus, un sel de biguanide polymérique, tel que le chlorhydrate de biguanide.

La demande FR-2.710.919 (FINANCIERE EPARCO) décrit une autre composition liquide détergente.

Ces compositions bien que donnant satisfaction, présentent, du fait de leur forme liquide, des inconvénients notoires.

Leur inconvénient principal réside dans le fait qu'il est difficile d'y incorporer des enzymes , car celles-ci se dégradent rapidement, en raison de l'absence de support.

De plus, elles risquent, une fois conditionnées, d'être renversées par l'utilisateur.

Les compositions sous forme de poudre, contenant des charges, permettent de stabiliser les enzymes.

Un nombre restreint de compositions nettoyantes et décontaminantes sous forme de poudre sont connues de l'homme du métier. Elles présentent néanmoins l'inconvénient de posséder des spectres d'activité limités vis-à-vis des germes.

Ainsi, le brevet GB-2.132.087 décrit une composition germicide désinfectante comprenant un agent tensioactif cationique, un agent antiseptique et un agent tensioactif anionique. L'agent antiseptique est la chlorexidine. La composition décrite comprend en outre un gel de silice (silicasol).

Cette composition ne contient pas de sel de biguanide, ni de composé cationique ammonium quaternaire.

Le brevet australien AU-477 963 est relatif à une composition contenant de la chlorexidine, un ammonium quaternaire, qui n'est ni le didécyldiméthylammonium, ni le tétradécyldiméthylbenzyl ammonium, un détergent anionique, dont la composition n'est pas divulguée, ainsi que divers autres composés tels que des cendres. Le produit final se présenterait, selon les lignes 4 à 6, page 4, sous la forme d'un matériau granulaire de couleur blanche.

Le faible nombre de compositions solides est dû au fait que l'homme du métier désirant fabriquer de telles compositions solides se trouve confronté à l'impossibilité d'introduire des quantités trop importantes de composés actifs sous forme liquide lors de la fabrication de ces poudres. De ce fait, elles sont peu actives.

Il est donc nécessaire de trouver des associations de principes actifs présentant des activités très importantes, à faible dose.

La demanderesse s'est donc attaché à trouver une composition nettoyage et décontaminante sous forme solide présentant un spectre germicide large et varié, tout en ayant une forte activité à faible dose.

Elle a mis en évidence que l'association d'au moins deux principes actifs décontaminants sélectionnés et d'un alcool gras ayant des propriétés de nettoyant permet de résoudre l'ensemble des problèmes posés à l'homme du métier, exposés ci-dessus.

La présente invention est donc relative à une composition nettoyante et décontaminante en poudre, comprenant des charges, caractérisée en ce qu'elle comprend, en outre, une association, en quantités synergiques, les composés suivants:
- un sel de biguanide polymérique,
- un ou plusieurs composés cationiques ammonium quaternaire répondant à la formule R₁R₂N(CH₃)₂⁺, dans laquelle R₁ et R₂ représentent indépendamment un résidu alkyle en C₃ à C₁₅ ou un groupe phényle, éventuellement substitué, ou l'un de leurs sels, et
- un alcool gras en C₆ à C₂₀ éthoxylé.

De tels composés ammonium quaternaire sont préférentiellement un sel de didécylméthyl ammonium et un sel de tétradécyldiméthylbenzyl ammonium

Avantageusement, le sel de biguanide est le chlorhydrate de biguanide. La composition peut comprendre en poids entre environ 0,1 et 15%, et préférentiellement environ 0,4% en poids en sel de biguanide.

Le sel préféré de didécyldiméthyl ammonium est le chlorure. La composition peut comprendre entre environ 1 et 15%, et préférentiellement environ 4% en poids de sel de didécyldiméthyl ammonium.

De manière avantageuse, le sel de tétradécyldiméthylbenzyl ammonium est le chlorure. La composition comprend avantageusement entre environ 1 et 25%, préférentiellement environ 5% en poids de sel de tétradécyldiméthylbenzylammonium.

Le composant alcool gras éthoxylé est avantageusement un alcool gras éthoxylé en C₁₈, et plus particulièrement l'alcool cétostéarylique éthoxylé. Un tel alcool est de manière préférentielle éthoxylé à raison de 25 ou 50 moles d'oxyde d'éthylène par mole d'alcool. La composition peut comprendre de 1 à 15%, préférentiellement 5% en poids d'alcool gras.

La composition selon la présente invention peut aussi comprendre un agent chélatant, tel que l'acide éthylènediamine tétraacétique (EDTA). Elle comprend ainsi préférentiellement entre environ 1 et 15%, et préférentiellement 4% en poids d'EDTA.

Ladite composition comprend aussi des charges, à raison d'environ 30 à 95%, préférentiellement 70 à 85%, et encore plus préférentiellement 80% en poids de la composition. De telles charges peuvent être toutes charges connues de l'homme du métier susceptibles de rentrer dans des compositions décontaminantes et nettoyantes en poudre, et en particulier les métasilicates, les carbonates, les sulfates, et les tripolyphosphates, et préférentiellement leurs sels de sodium.

Cette composition peut en outre contenir des enzymes destinées à améliorer sa capacité de nettoyage. De telles enzymes peuvent être des enzymes de type amylase ou protéase.

La composition, telle que décrite ci-dessus, peut être fabriquée par un procédé dans lequel les composés se présentant sous forme liquide, par exemple le sel de didécyldiméthyl ammonium et le sel de biguanide polymérique, sont pulvérisés sur les autres composés sous forme de poudres dans un pulvérisateur muni d'une ou plusieurs buses.

La composition sous forme de poudre selon la présente invention, une fois dissoute dans une quantité d'eau adéquate, par exemple à environ 0,4% en poids, présente une activité germicide importante à faible concentration. Une telle composition, sous forme d'une solution aqueuse, constitue un autre objet de l'invention.

La composition selon la présente invention présente, en particulier. l'avantage par rapport aux compositions solides déjà connues de l'homme du métier, d'être active sur le virus de l'hépatite B, ainsi que sur *Mycobacferium tuberculosis.*

Plus généralement, la présente composition présente une excellente activité bactéricide, notamment en présence de substance interférente, telle que définie par la norme AFNOR NFT 72-171, une très bonne activité fongicide, telle que définie par la norme AFNOR NFT 72-201, ainsi qu'une très bonne activité virucide.

Enfin, la composition selon la présente invention est dénuée de toxicité, aux doses utilisées.

La présente invention est illustrée, sans pour autant être limitée par les exemples qui suivent.

### EXEMPLE 1

### Fabrication de la composition selon l'invention (poudre KLS)

Les composés suivants, sous la forme de poudre, ont été mélangés dans un mélangeur:

| | |
|---|---|
| Chlorure de tétradécyldiméthylbenzyl ammonium | 5% |
| Alcool céto-stéarylique éthoxylé | 5% |
| EDTA | 4% |
| Amylase et protéase | 1% |
| Métasilicate de sodium,carbonate de sodium,sulfate de sodium et tripolyphosphate de sodium | 80,6% |

Ces proportions sont calculées par rapport au poids de la composition finale.

La composition de liquides suivante est pulvérisée sur le mélange de poudres suivant:

| | |
|---|---|
| Chlorure de didécyldiméthyl ammonium | 4% |
| Chlorhydrate de biguanide | 0,4% |

La composition ainsi obtenue est conditionnée.

### EXEMPLE 2

### Détermination de l'activité bactéricide spectre 4 de la composition selon l'exemple 1 en présence d'une substance interférente de référence, selon la norme AFNOR NF T 72-171 (novembre 1988) « conditions de saleté » Méthode par filtration sur membrane

### 1. CONDITIONS EXPERIMENTALES

Température d'essai: 20°C ± 1°C
Temps de contact: 5 minutes
Diluant du produit utilisé lors des essais: eau distillée stérile

### Souches bactériennes:

Entretenues et contrôlées selon la norme AFNOR T 72-140 (août 1988)

| | |
|---|---|
| *Pseudomonas aeruginosa* | CIP A22 |
| *Escherichia coli* | CIP 54 127 |
| *Staphylococcus aureus* | CIP 53 154 |
| *Enterococcus hirae* | CIP 58 55 |

### Substance interférente:

Conditions de saleté: mélange albumine bovine 1% + eau dure à 30°C français.

Stabilité en présence du produit: absence de précipité.

### 2. MODE OPERATOIRE POUR LES ESSAIS PRELIMINAIRES

Référence et nature des membranes:

*SARTORIUS 13 906 47 ACN, nitrate de cellulose, porosité 0,45 µm, blanches, quadrillées.

### Liquides de lavage des membranes:

pour *Pseudomonas aeruginosa* et E*nterococcus hirae:*
. nature: eau distillée additionnée de 0,5% (v/v) de tween 80.
. mode de stérilisation: autoclavage à 121°C pendant 25 minutes.
. nombre de lavages avec ce liquide: 3.
. volume de liquide utilisé pour chaque lavage: 50 ml.
   pour *Staphylococcus aureus:*
. nature: eau distillée additionnée de 5% (v/v) de tween 80.
. mode de stérilisation: autoclavage à 121°C pendant 25 minutes.
. nombre de lavages avec ce liquide: 3
. volume de liquide utilisé pour chaque lavage: 100 ml.
   pour *Escherichia coli:*
. nature: eau distillée additionnée de 5% (v/v) de tween 80.
. mode de stérilisation: autoclavage à 121°C pendant 25 minutes.
. nombre de lavages avec ce liquide: 5.
. volume de liquide utilisé pour chaque lavage: 100 ml.

Neutralisant(s) ajouté(s) au milieu de dénombrement et concentrations(s): néant.

Autres additions au milieu de dénombrement:

∗0,0025% (p/v) de chlorure de triphényl tétrazolium, entraînant une coloration des colonies et permettant un meilleur dénombrement des survivants.

### Milieu de dénombrement particulier:

*pour *Enterococcus hirae,* utilisation d'un milieu gélosé à la bile, l'esculine et l'azide de sodium BIOKAR OBK 016) qui noircit en présence d'entérocoques.

### 3. RESULTATS DES ESSAIS PRELIMINAIRES DANS LES CONDITIONS DECRITES

Ces résultats figurent dans le tableau 1.

Les essais préliminaires sont validés si N' est supérieur ou égal à 0,5 N et si n est supérieur ou égal à 0,5 N'.

La composition du liquide de lavage des membranes et le mode de lavage des membranes sont validés sur la POUDRE KLS pour toutes concentrations non supérieures à:
. 1,0% (m/v) pour les souches *Pseudomonas aeruginosa* et *Enterococcus hirae*
. 0,25% (m/v) pour la souche *Escherichia coli*
. 0,10% (m/v) pour la souche *Staphylococcus aureus.*

### 4 ESSAI N° 2

Les résultats de cet essai figurent dans le tableau 2.
Sont bactéricides les concentrations pour lesquelles:
X est inférieur ou égal à N'.

### CONCLUSION

La POUDRE KLS présente à 20°C une activité bactéricide spectre 4 en présence d'albumine et d'eau dure (conditions de saleté) conforme à la norme AFNOR NF T 72-171 (novembre 1988).

### EXEMPLE 3

### Détermination de la composition de l'activité fongicide de la composition selon l'exemple 1 selon la norme AFNOR NF T 72-201 (septembre 1987) - Méthode par filtration sur membrane

### 1.CONDITIONS EXPERIMENTALES

Température d'essai: 20°C ± 1°C
Temps de contact: 15 minutes.
Diluant du produit utilisé lors des essais: eau distillée stérile Souches fongiques:

| | |
|---|---|
| *Absidia corymbifera* | IP 1129-75 |
| *Cladosporium cladosporioides* | IP 1232-80 |
| *Candida albicans* | IP 1180-79 |
| *Penecillium verrucosum* var. *cyclopium* | IP 1231-80 |

### 2. MODE OPERATOIRE POUR LES ESSAIS PRELIMINAIRES

Référence et nature des membranes:
* SARTORIUS 13 906 47 ACN, nitrate de cellulose, porosité 0,45 µm, blanches, quadrillées
* SARTORIUS 13 006 47 ACN, nitrate de cellulose, porosité 0,45 µm, noires, quadrillées (pour *Absidia corymbifera* et *Candida albicans).*

Liquide de lavage des membranes:
. nature: eau distillée additionnées de 0,5% (v/v) de tween 80.
. mode de stérilisation: autoclavage à 121°C pendant 25 minutes.
. nombre de lavages avec ce liquide: 3.
. volume de liquide utilisé pour chaque lavage: 50 ml.

Neutralisant(s) ajouté(s) au milieu de dénombrement et concentration(s): néant.

Autres additions au milieu de dénombrement: néant.

### 3 RESULTATS DES ESSAIS PRELIMINAIRES DANS LES CONDITIONS DECRITES

Les résultats figurent dans le tableau 3.

Les essais préliminaires sont validés si N' est supérieur ou égal à 0,5 N et si n est supérieur ou égal à 0,5 N'.

La composition du liquide de lavage des membranes et le mode de lavage des membranes sont validés sur le produit POUDRE KLS pour toutes concentrations non supérieures à:
. 0,5% (m/v) pour la souche *Absidia corymbifera*
. 0,05% (m/v) pour les souches *Cladosporium cladosporioides, Candida albicans, Penicillium verrucosum* var. *cyclopium.*

### · 4. Essai N°2

· Les résultats de cet essai figurent dans le tableau 4.

Sont fongicides les concentrations pour lesquelles:

X est inférieur ou égal à N'.

### CONCLUSION

Le produit POUDRE KLS présente à 20°C une activité fongicide en eau distillée conforme à la norme AFNOR NF T 72-201 (septembre 1987).

### EXEMPLE 4

### Evaluation de l'effet de la composition selon l'exemple 1 sur le virus de l'hépatite B (sang humain)

Adaptée de la technique de Frosner. Jentsch and Uthemann (Zbl. Bakt Hyg., I Abt, Orig. B 176; 1, 1982), la technique utilisée teste l'inhibition de l'HBsAg par le désinfectant, (la composition selon l'exemple 1) dans une réaction antigène-anticorps.

Le désinfectant est dilué à 0,1%, 0.4%, 0,5% et 0,6% dans de l'eau pour préparation injectable. Les dilutions sont chauffées à 37°C 15 minutes pour solubiliser la poudre. Les dilutions restent avec des particules non solubles.

L'efficacité de ce désinfectant contre le virus de l'hépatite est testée à la température ambiante (20°C).

Les temps de contact sont: 5, 10 et 15 minutes.

Le sang d'origine humaine (Hépatite B) utilisé dans la réaction est prélevé sur tube EDTA puis dilué à 2% et 5% en eau distillée.

### Méthode utilisée pour tester l'inactivation du virus

L'évaluation est faite à température ambiante en présence ou non de protéines comme substances interférentes.
Réaction
1 volume sérum positif HBsAg (prédilué au 1/100 dans PBS)
1 volume eau distillée
ou 1 volume sang humain à 2%
ou 1 volume sang humain à 5%
et 8 volumes de la concentration du désinfectant testé x 1,25. Incubation 5, 10 et 15 minutes.

### Arrêt de la réaction

Chaque mélange est dilué au 1/100 dans du PBS contenant 10% de SVF.

La quantité d'antigène Hbs restante est testée avec le Kit: Technique en Radioimmunoassy (Austria II - 125 I Diagnostic Kit) Antibody to Hépatis B surface Antigen 125I (Humain).

Une valeur moyenne est calculée à partir de deux essais (cpm 125 I anti-HBs). L'antigène résiduel couplé à l'anticorps est révélé par le marqueur radioactif.

### Témoins:

Le 100% du couplage est calculé en faisant:
4 témoins positifs avec 1 volume sérum positif HBsAg + 1 volume eau distillée,
4 témoins positifs avec 1 volume sérum positif HBsAg + 1 volume sang humain 2%
4 témoins positifs avec 1 volume positif Hbsag + 1 volume sang humain 5%.

Chaque témoin est additionné de 8 volumes d'eau distillée et dilués au 1/100 dans PBS (10% SVF).

Le 0% du couplage correspond à la moyenne de 7 témoins négatifs pour lesquels chaque concentration de la composition à tester (le désinfectant) est diluée au 1/100 dans du PBS additionnés de 10% SVF.

Un nombre de cpm (x) est ainsi déterminé, très proche du témoin négatif du kit.

Toute valeur inférieure à 2,1 x (cut off) correspond à une inactivation totale de l'antigène HBS. Le chiffre figurant dans les tableaux 5 à 8 sont donnés après calcul du seuil (cut off.).

### Conclusion:

La technique utilisée teste l'inhibition de l'HBsAg par le désinfectant, dans une région antigène-anticorps.

La composition selon l'exemple 1 (poudre KLS) lot 240596 est active à vis du virus de l'Hépatite B en présence de sang humain à 2% et 5% et en milieu aqueux à la concentration de 0,4% durant un temps de contact de 5 minutes.

### EXEMPLE 5:

### Evaluation du pouvoir bactéricide de la composition selon l'exemple 1 vis-à-vis de Mycobacterium tuberculosis variété hominis

Le milieu BACTEC 7 H 12 B est un milieu de base Middlebrook 7H9 enrichi, contenant un acide gras marqué au carbone ¹⁴C.

En présence de mycobactéries, cet acide gras est métabolisé et conduit à la libération de ¹⁴CO₂ dans l'air du flacon. La radioactivité ainsi émise est mesurée par le BACTEC 460. Elle est traduite en index numérique sur une échelle allant de 0 à 999. Cet index numérique est désigné G.l. (Growth Index). L'augmentation du G.l. est proportionnelle au nombre de bactéries présentes. Seules les valeurs supérieures à 10 sont significatives.

La souche de *Mycobactérium* est préalablement titrée sans le produit à tester. L'action de la solution désinfectante est ensuite testée sur plusieurs dilutions d'une suspension de mycobactéries.

### 1) Matériel et méthodes.

### • Matériel

- Technique utilisée:: BACTEC 460 (Becton Dickinson)
milieu de culture 7 H 12 B
- Souche-test:: *Mycobactérium tuberculosis* variété *hominis* Souche sauvage isolée chez un malade.

### 2. Méthodes

### • a) Numération de l'inoculum

Une suspension à Mc Farland 3 (100 mg/ml) en eau distillée stérile est préparée à partir d'une culture pure de *Mycobactérium* prélevée sur milieu solide (Loewenstein). A partir de cette solution mère, des dilutions de 10 en 10 sont effectuées jusqu'à 10⁻⁹.

### • b) Préparation de l'échantillon

Le produit est testé à une concentration de 0,4% et pendant un temps de contact de 15 minutes sous agitation.

200 µl d'une solution de produit 2 fois plus concentrée sont mis en contact avec 200 µl de suspension de *Mycobactérium* (dilution volume à volume). De ce fait, conformément au protocole, la concentration finale du produit est de O,4%.

### • c) Lavage et centrifugation

Après le temps de contact, 50 ml d'eau distillée stérile sont ajoutés. Le tout est agité puis centrifugé pendant 30 minutes à 3000 tr/mn.

### • d) Ensemencement

Après centrifugation, le surnageant est éliminé et le culot repris avec 2 ml d'eau distillée stérile (dilution au 1/10).

Des dilutions successives de 10 en 10 jusqu'à 10⁻⁵ sont alors effectuées.

100 µl de chaque dilution sont injectés dans un flacon de milieu 7 H 12 B.

L'incubation se poursuit pendant 21 jours à 37°C.

L'indice de croissance (G.l.) est lu tous les deux jours sur le lecteur BACTEC 460.

### 2. Résultats

L'ensemble des résultats obtenus est présenté dans les tableaux 9 et 10.

### 3. Conclusion

Le produit KLS obtenu selon l'exemple 1 testé à 0,4% pendant 15 minutes vis-à-vis de *Mycobactérium tuberculosis* présente une excellente activité sur cette mycobactérie.

Une réduction de la croissance égale à 6 log a été observée après 3 semaines d'incubation à 37°C.

### EXEMPLE 6: Comparaison de la composition selon l'exemple 1 et de compositions en poudre de l'état de la technique.

Six compositions en poudre de l'état de la technique, contenant du chlorure de didécyldiméthylammonium, des charges, et éventuellement de l'EDTA, ont été comparées pour leurs activités bactéricides. fongicides et vérucides.

Les activités de ces six compositions, appelées A à F sont présentées dans le tableau 11.

Il apparaît que la composition selon la présente invention présente des activités bactéricides , fongicides et vérucides supérieures à celles des compositions A à F.

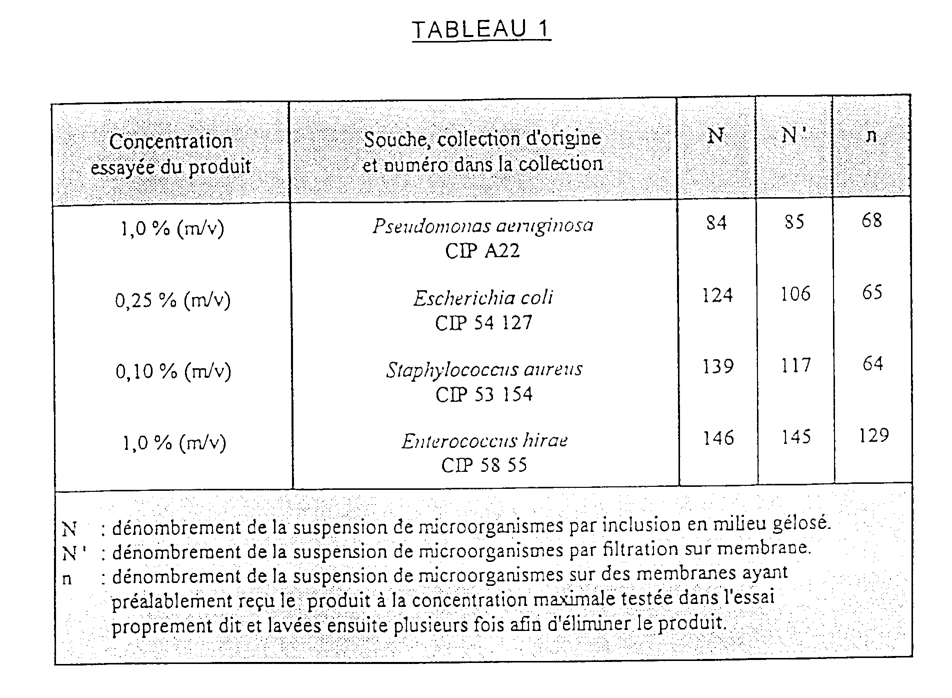

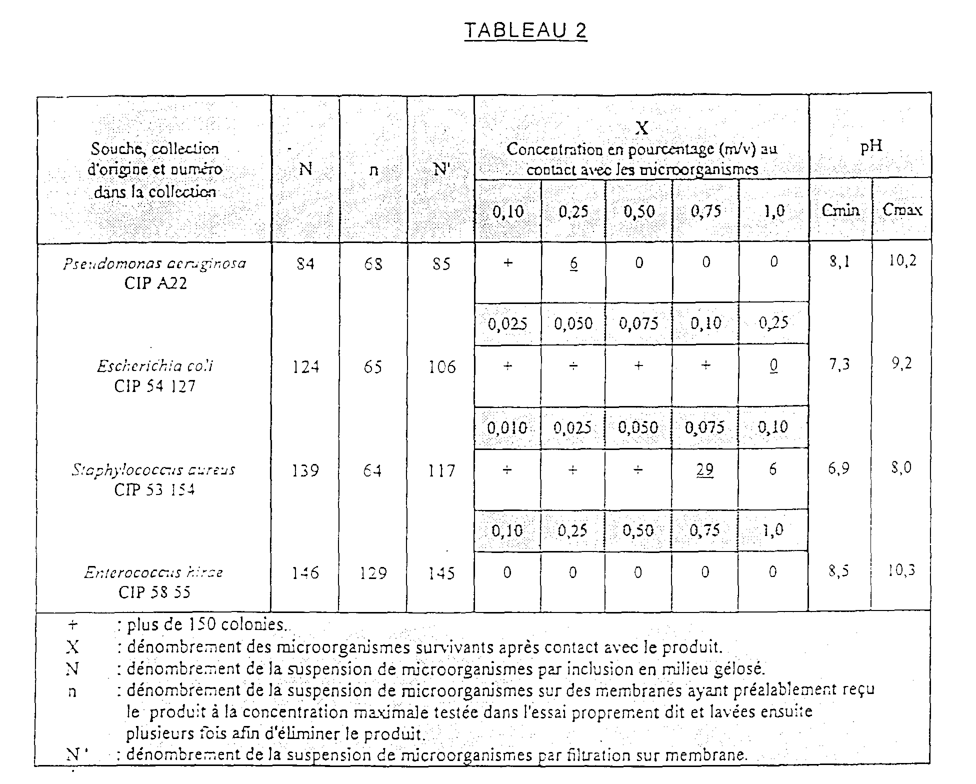

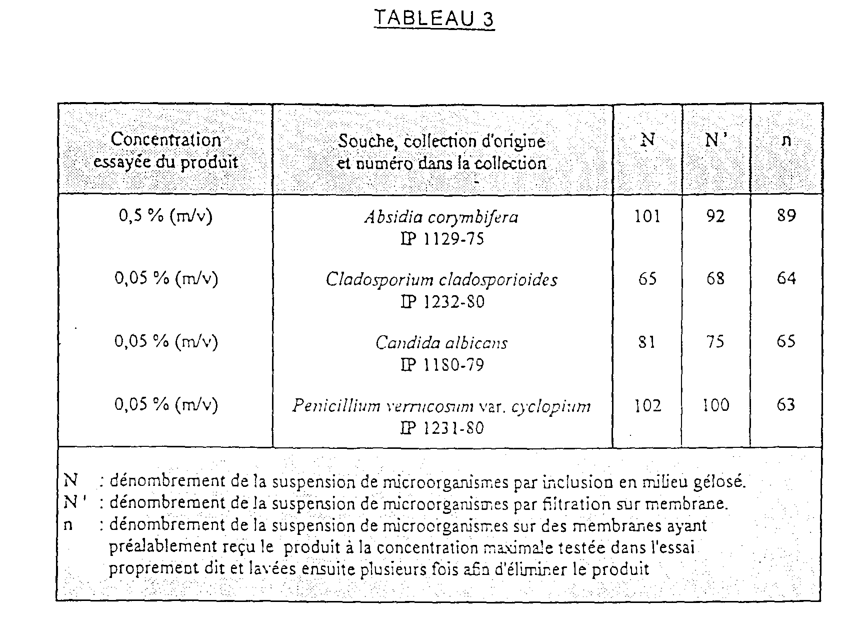

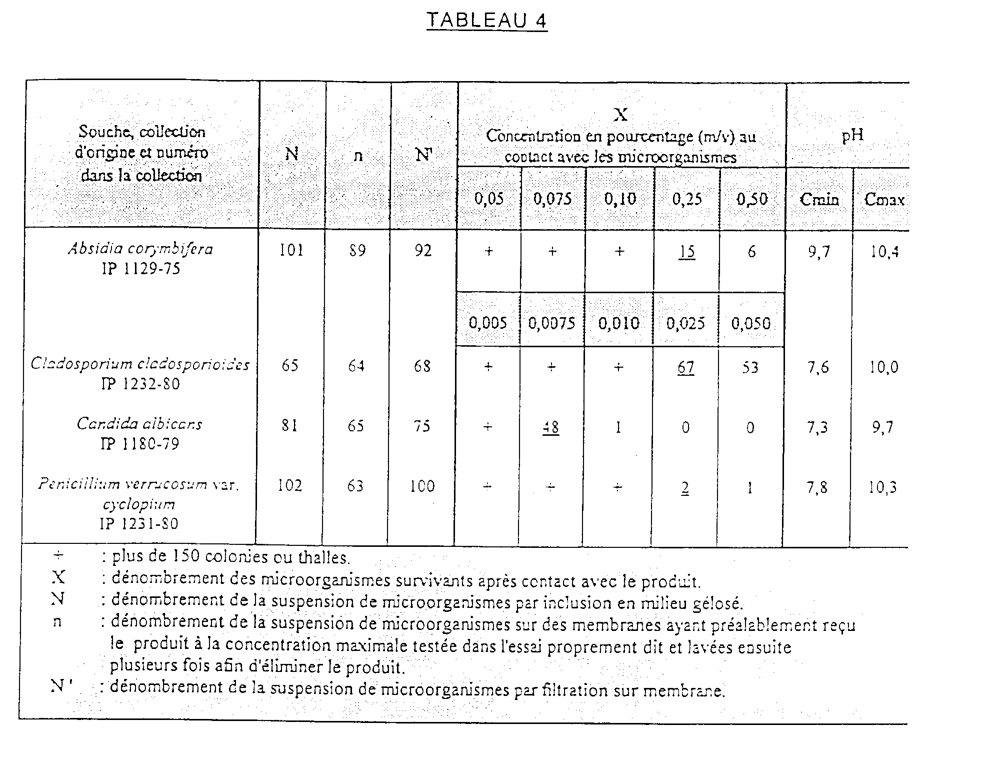

**TABLEAU 5**

| Concentration de la composition: 0,1% | | |
|---|---|---|
| Temps de contact | 2% sang humain | 5% sang humain |
| 5 minutes | 1431 | 2376 |
| 10 minutes | 1100 | 2127 |
| 15 minutes | 1218 | 2036 |
| Antigène sans désinfectant | 3589 | 3683 |
| Désinfectant sans antigène | 191 | 191 |

**TABLEAU 6**

| Concentration de la composition: 0,4% | | | |
|---|---|---|---|
| Temps de contact | 2% sang humain | 5% sang humain | E.D. |
| 5 minutes | 113 | 151 | 115 |
| 10 minutes | 93 | 126 | 129 |
| 15 minutes | 81 | 113 | 144 |
| Antigène sans désinfectant | 3583 | 3578 | 5787 |
| Désinfectant sans antigène | 176 | 176 | 267 |

**TABLEAU 7**

| Concentration de la composition: 0,5% | | | |
|---|---|---|---|
| Temps de contact | 2% sang humain | 5% sang humain | E.D. |
| 5 minutes | 83 | 132 | 128 |
| 10 minutes | 86 | 111 | 174 |
| 15 minutes | 91 | 85 | 130 |
| Antigène sans désinfectant | 3554 | 3566 | 5768 |
| Désinfectant sans antigène | 179 | 179 | 253 |

**TABLEAU 8**

| Concentration de la composition: 0,6% | | | |
|---|---|---|---|
| Temps de contact | 2% sang humain | 5% sang humain | E.D. |
| 5 minutes | 88 | 90 | 125 |
| 10 minutes | 74 | 94 | 120 |
| 15 minutes | 79 | 78 | 115 |
| Antigène sans désinfectant | 3664 | 3701 | 5716 |
| Désinfectant sans antigène | 198 | 198 | 277 |

**TABLEAU 9**

| **Date** | J 1 | J 4 | J 7 | J 9 | J 11 | J 14 | J 16 | J 18 |
|---|---|---|---|---|---|---|---|---|
| Dilution | 30/7 | 2/8 | 5/8 | 7/8 | 9/8 | 12/8 | 14/8 | 16/8 |
| 1 | 999 | 999 | 999 | | | | | |
| 10⁻¹ | 93 | 999 | 999 | 999 | | | | |
| 10⁻² | 12 | 212 | 999 | 999 | | | | |
| 10⁻³ | 4 | 33 | 484 | 999 | 999 | | | |
| 10⁻⁴ | 4 | 20 | 255 | 797 | 999 | 999 | 999 | 999 |
| 10⁻⁵ | 3 | 9 | 114 | 406 | 942 | 999 | 999 | 999 |
| 10⁻⁶ | 3 | 7 | 80 | 305 | 671 | 999 | 999 | 999 |
| 10⁻⁷ | 4 | 9 | 66 | 228 | 594 | 999 | 999 | 999 |
| 10⁻⁸ | 3 | 6 | 29 | 108 | 322 | 999 | 999 | 999 |
| 10⁻⁹ | 3 | 3 | 16 | 67 | 218 | 763 | 979 | 999 |

**TABLEAU 10**

| **Date** | J 1 | J 4 | J 7 | J 9 | J 11 | J 14 | J 16 | J 18 | J 21 |
|---|---|---|---|---|---|---|---|---|---|
| Dilution | 30/7 | 2/8 | 5/8 | 7/8 | 9/8 | 12/8 | 14/8 | 16/8 | 19/8 |
| 10⁻¹ | 8 | 58 | 310 | 584 | 985 | 999 | 999 | 999 | 999 |
| 10⁻² | 4 | 5 | 24 | 55 | 129 | 445 | 883 | 999 | 999 |
| 10⁻³ | 3 | 2 | 2 | 2 | 3 | 8 | 14 | 40 | 305 |
| 10⁻⁴ | 4 | 2 | 2 | 3 | 0 | 3 | 2 | 2 | 3 |
| 10⁻⁵ | 2 | 3 | 2 | 2 | 0 | 6 | 10 | 4 | 26 |

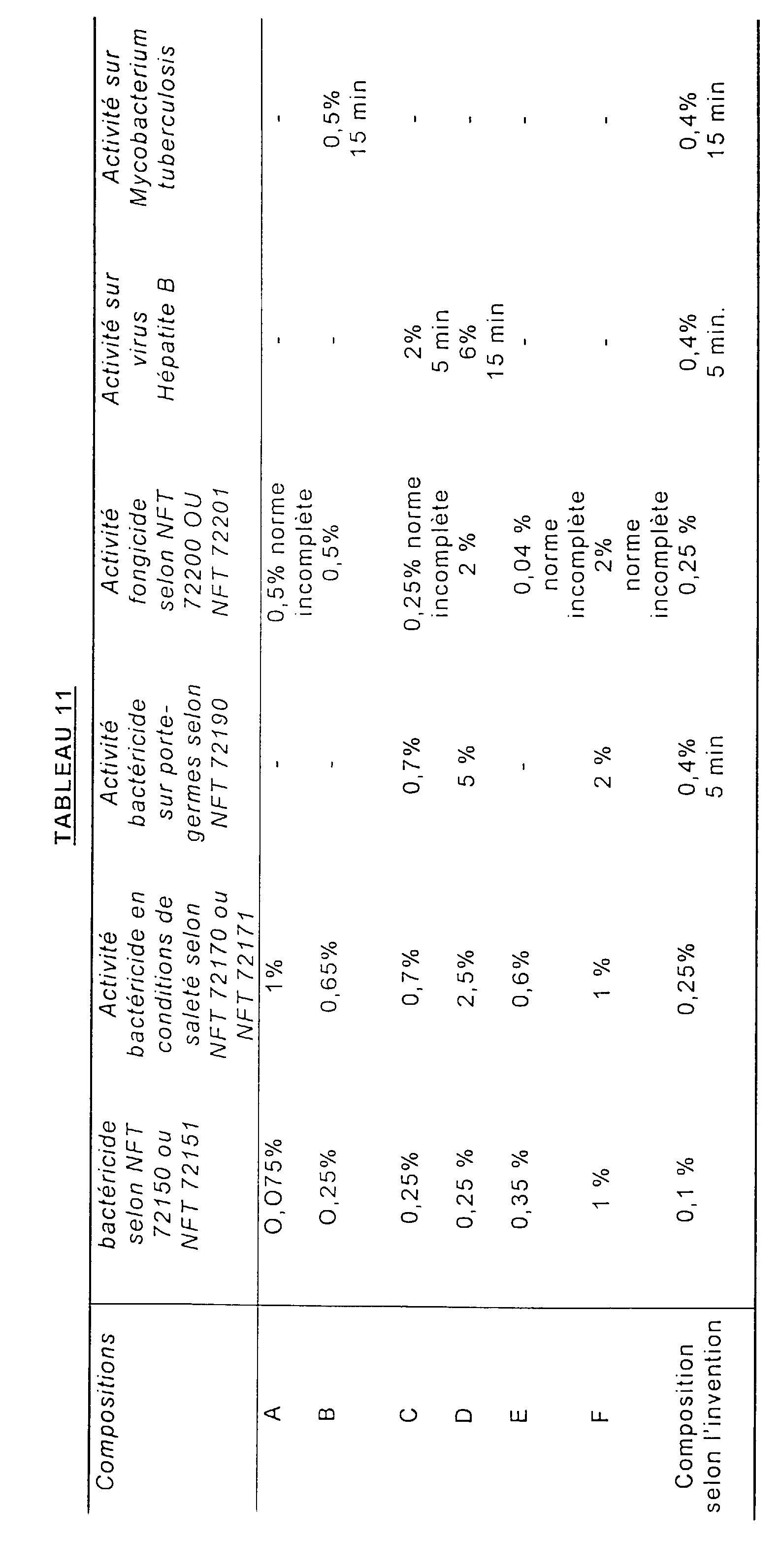

## Revendications

1. Composition nettoyante et décontaminante en poudre comprenant des charges, caractérisée en ce qu'elle comprend en outre en association, en quantités synergiques, les composés suivants:
- un sel de biguanide polymérique,
- un ou plusieurs composés cationiques ammonium quaternaire répondant à la formule R₁R₂N(CH₃)₂⁺, dans laquelle R₁ et R₂ représentent indépendamment un résidu alkyle en C₃ à C₁₅, ou un groupe phényle éventuellement substitué, ou l'un de leurs sels, et.
- un alcool gras en C₆ à C₂₀ éthoxylé.

2. Composition selon la revendication 1, caractérisée en ce que le composé cationique ammonium quaternaire comprend en mélange:
- un sel de didécyldiméthyl ammonium, et
- un sel de tétradécyldiméthylbenzyl ammonium,

3. Composition selon l'une des revendication 1 et 2 caractérisée en ce qu'elle comprend du chlorhydrate de biguanide.

4. Composition selon l'une des revendications 1 à 3, caractérisée en ce qu'elle comprend entre environ 0,1 à 15%, et préférentiellement environ 0,4% en poids de sel de biguanide.

5. Composition selon l'une des revendications 1 à 4, caractérisée en ce qu'elle comprend du chlorure de didécyldiméthyl ammonium.

6. Composition selon l'une des revendications 1 à 5, caractérisée en ce quelle comprend entre environ 1 et 15%, et préférentiellement environ 4% en poids de sel de didécyldiméthyl ammonium.

7. Composition selon l'une des revendications 1 à 6, caractérisée en ce qu'elle comprend du chlorure de tétradécyldiméthylbenzyl ammonium.

8. Composition selon l'une des revendications 1 à 7, caractérisée en ce qu'elle comprend entre environ 1 et 25%, préférentiellement 5% en poids de sel de tétradécyldiméthylbenzyl ammonium.

9. Composition selon l'une des revendications 1 à 8, caractérisée en ce qu'elle comprend de l'alcool cétostéarylique éthoxylé.

10. Composition selon l'une des revendications 1 à 9, caractérisée en ce qu'elle comprend entre environ 1 et 15%, préférentiellement environ 5% en poids d'alcool gras éthoxylé.

11. Composition selon l'une des revendications 1 à 10, caractérisée en ce qu'elle contient en outre entre environ 1 et 15%, et préférentiellement environ 4% en poids d'EDTA.

12. Composition selon l'une des revendications 1 à 11, caractérisée en ce qu'elle contient des enzymes de type amylase ou protéase.

13. Composition selon l'une des revendications 1 à 12, caractérisée en ce que les charges sont des métasilicates, des carbonates, des sulfates, ou des tripolyphosphates.

14. Composition selon l'une des revendications 1 à 13, caractérisée en ce qu'elle contient entre environ 30 et 95%, préférentiellement entre 70 et 85%, et encore plus préférentiellement 80% en poids de charges.

15. Composition selon l'une des revendications 1 à 14, caractérisée en ce qu'elle comprend les composés suivants:
- chlorure de didécyldiméthyl ammonium 4%
- chlorure de tétradécyldiméthylbenzyl ammonium 5%
- chlorhydrate de biguanide 0,4%
- alcool cétostéarylique éthoxylé 5%
- EDTA 4%
- protéase et amylase 1%
- métasilicate de sodium,carbonate de sodium, sulfate de sodium et tripolyphosphate de sodium 80,6%

16. Procédé de fabrication d'une composition selon l'une des revendications 1 à 15, caractérisé en ce que les composés se présentant sous forme liquide, par exemple le sel de didécyldiméthyl ammonium et le sel de biguanide polymérique, sont pulvérisés sur les autres composés sous la forme de poudres.

17. Solution aqueuse de la composition selon l'une des revendications 1 à 15.
